# EUROPEAN PATENT SPECIFICATION

(11) **EP 0 456 292 B1**
(45) Date of publication and mention of the grant of the patent: **09.03.1994**
(21) Application number: 91200842.2
(22) Date of filing: 11.04.1991
(51) Int. Cl.: B60S 1/08

(54) **Wiper motor gear cover**
Wischermotor-Getriebeabdeckung
Recouvrement pour la transmission d'un moteur d'essuie-glaces

(30) Priority: 05.05.1990 GB 9010223
(43) Date of publication of application: 13.11.1991
(73) Proprietor: AUTOMOTIVE COMPONENTS DUNSTABLE LIMITED, Dunstable Bedfordshire LU6 1UZ (GB)
(72) Inventor: Cosby, Christopher, Leighton Buzzard, Beds LU7 7AP (GB)
(74) Representative: Britter, Keith Palmer

(56) References cited:
- EP-A- 0 188 226
- DE-A- 3 434 060
- DE-A- 3 730 448
- GB-A- 1 283 154
- GB-A- 2 108 776
- US-A- 4 791 698

## Description

This invention relates to windscreen wiper motors, and, in particular, to wiper motor gear covers for windscreen wiper motors as specified in the preamble of claim 1.

Windscreen wiper electric motors are customarily provided with a speed-reduction gear mechanism between a rotatable armature of the armature and an output crank shaft of the motor in order to provide a suitable rate of rotation of the output crank shaft. Also associated with the gear mechanism is a rotary control plate which carries on a plane side thereof a series of annular contact tracks which are engaged by a series of contact brushes mounted on a metal cover of the gear mechanism which overlies the rotary control plate. The engagement of these contact brushes with respective ones of these control tracks is used to govern the supply of electric current to the windscreen wiper motor during a parking sequence for the wiper motor in a manner well-known in the art. One of the contact brushes used is termed an "earth brush", and is mounted directly in electrical contact with the metal cover of the gear mechanism of the wiper motor. The earth brush serves to short-circuit the windings of the armature of the wiper motor to earth in order to rapidly stop the rotation of the armature, and it does so by making contact with a specified area of one of the annular contact tracks when a windscreen wiper blade driven by the output crank shaft of the wiper motor is in a predefined, parked position. It is, of course, essential for the earth brush to be mounted securely upon the metal cover so as to prevent any relative movement occurring between the earth brush and the metal cover which could lead to an inadvertent displacement in the parked position of the associated windscreen wiper blade. One known method of mounting the earth brush securely in place on the metal cover plate is to form the earth brush from sheet metal as a cranked member having a planar base and a cranked contact arm extending therefrom, and to stake the planar base to the metal cover plate by staking over two half-sheared posts of the metal cover plate which pass through respective apertures in the planar base of the earth brush.

The size and shape of the gear mechanism of a windscreen wiper motor and its position relative to the actual wiper motor and the output crank shaft results in a relatively bulky and awkwardly-shaped item to locate in the relatively confined spaces available for mounting such a wiper motor in position beneath the bonnet of a motor vehicle in order to drive a pair of windscreen wiper blades associated with a windscreen of that vehicle. Consequently it has been necessary to produce windscreen wiper motors in two configurations, one configuration being where the gear mechanism is retained within a housing positioned to the left-hand side of the wiper motor, when viewed from the output crank shaft end, and the other configuration being where the gear mechanism is retained within a housing positioned to the right-hand side of the wiper motor, when viewed from the output crank shaft end, so as to provide as far as possible a range of windscreen wiper motors to fit most motor vehicles.

For economy of manufacture, it would be desirable to ensure the maximum use of standard, universal components when manufacturing the two configurations of windscreen wiper motor, so as to reduce the need to produce specific, handed components for these two configurations. Up till now, this has not been possible as far as the metal cover plate of the gear mechanism is concerned, because of the need to retain the spatial relationship between the earth brush carried by the metal cover plate and the specified area of the annular contact track which determines the parked position of the windscreen wiper blades driven by the wiper motor when the wiper motor is installed in a motor vehicle. Consequently windscreen wiper motors have been manufactured with either a left-hand cover plate for the gear mechanism or with a right-hand cover plate for the gear mechanism.

A cover plate for a gear mechanism of a windscreen wiper motor according to the present invention is characterised by the features specified in the characterising portion of claim 1, and comprises a planar plate having an identical pattern formed on either side of the plate, each of which identical patterns is a mirror image of the other identical pattern, occupies exactly the same position on the plate relative to said axis of symmetry as does the other identical pattern and is configured to retain a shaped base portion of a contact member, said contact member having an arm portion extending at an angle from said base portion and terminating in a contact head, said contact head being positioned laterally to the left or to the right of said axis of symmetry, depending upon which side of the plate the shaped base member is retained when the plate is mounted on a housing of a gear mechanism.

Preferably each identical pattern is stamped into a respective side of the planar plate and includes one or more upstanding projections which locate within corresponding apertures in the shaped base portion of the contact member and are engageable therewith to retain the shaped base portion securely in place in the pattern.

Various arrangements can be used for retaining the metal cover plate of the invention in place on the wiper motor. Advantageously, the perimeter of the cover plate is provided with suitable apertures symmetrically arranged around said axis of symmetry. This ensures that the cover plate can be used on both the left-hand configuration wiper motors and the right-hand configuration wiper motors using threaded bolts or similar fasteners which extend through said symmetrically-arranged apertures and into threaded engagement with corresponding bores in a housing surrounding the gear mechanism of the wiper motor.

Preferably, the cover plate is a metal cover plate, the contact member is an earth brush for the windscreen wiper motor, and the contact member is secured in direct electrical contact with said metal cover plate.

The invention and how it may be performed are hereinafter particularly described with reference to the accompanying drawings, in which:
Figure 1 shows an isometric view of a prior art metal cover plate for the gear mechanism of a windscreen wiper motor;
Figure 2 shows a partial cross-sectional view of Figure 1, taken along the line 2-2';
Figure 3 shows an isometric view of a metal cover plate for the gear mechanism of a windscreen wiper motor according to a preferred embodiment of the present invention;
Figure 4 shows a partial cross-sectional view of Figure 3, taken along the line 4-4'; and
Figure 5 shows a partial cross-sectional view of Figure 3, taken along the line 4-4' with a contact brush member staked in position.

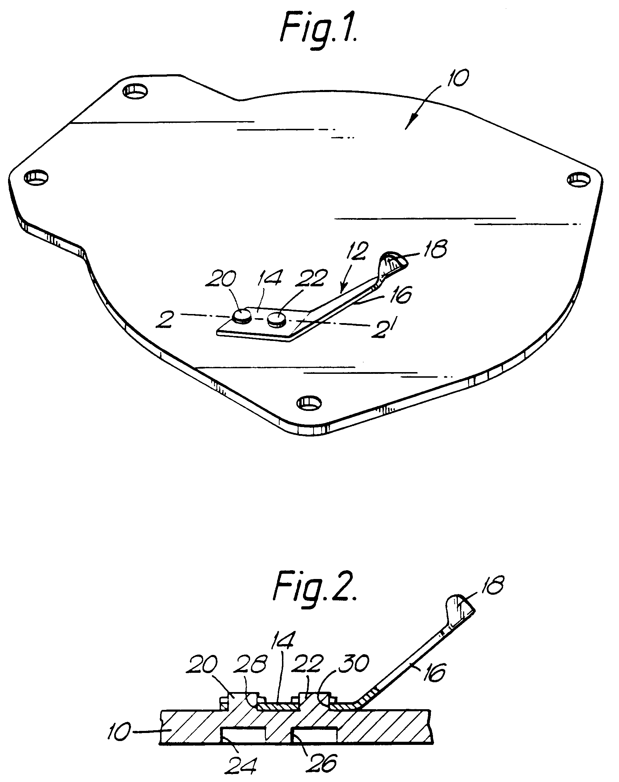

Referring now to Figures 1 and 2, these show a prior art metal cover plate 10 for the gear mechanism of a windscreen wiper motor (not shown) on which a contact brush member 12 is secured, which contact brush member 12 forms an earth brush for the windscreen wiper motor. Contact brush member 12 is formed from phosphor bronze sheet metal , and comprises a substantially rectangular base portion 14, from one end of which extends a flat arm portion 16 carrying at the other end thereof a contact head 18. Such a contact brush member is disclosed and claimed in GB-A-2 108 776. As can be seen in Figure 2, two circular bosses 20, 22 are extruded from one side of the cover plate 10 by stamping a configured punch (not shown) into the other side of the cover plate 10 to produce two circular indentations 24, 26. The rectangular base portion 14 of contact brush member 12 is provided with two circular apertures 28, 30 therein corresponding in size and position to the two circular bosses 20, 22, and the contact brush member 12 is secured in electrical contact with cover plate 10 by engaging the bosses 20, 22 in the respective circular apertures 28, 30 of the rectangular base portion 14, and then staking over the protruding portions of the bosses 20, 22 to clamp the rectangular base portion 14 of contact brush member firmly in contact with the cover plate 10. This type of fixing and the position of the contact brush member 12 on the cover plate 10 makes it necessary to produce cover plates in both a left-hand configuration and in a right-hand configuration in order to cover the complete range of windscreen wiper motors required.

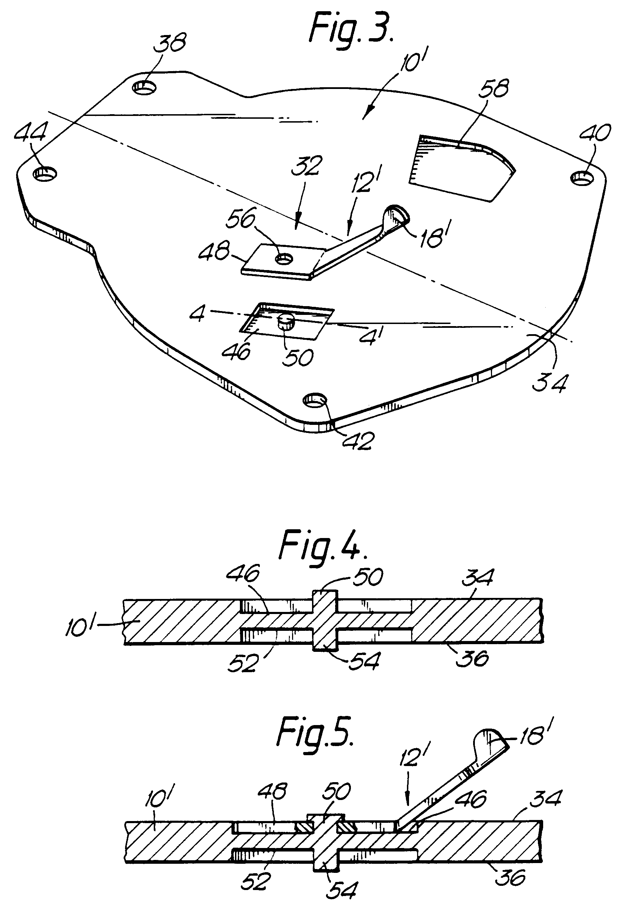

Turning now to Figures 3, 4 and 5, these illustrate a metal (e.g., mild steel) cover plate 10' according to a preferred embodiment of the present invention, in conjunction with a phosphor bronze contact brush member 12' which is of a similar shape and construction as the contact brush member 12 illustrated in Figures 1 and 2. Cover plate 10' is a substantially flat, shaped member of uniform thickness having two opposed planar surfaces 34 and 36, and which is symmetrical about an axis of symmetry 32 lying within the plane of the cover plate. Fixing apertures 38, 40, 42 and 44 are provided around the periphery of the cover plate 10', and are symmetrically located either side of the axis of symmetry 32. Thus the aperture 38 is located in the same position on the right-hand side of the axis of symmetry 32, as viewed in Figure 3, as is the aperture 44 on the left-hand side of the axis of symmetry 32; and the aperture 40 is located in the same position on the right-hand side of the axis of symmetry 32, as viewed in Figure 3, as is the aperture 42 on the left-hand side of the axis of symmetry 32.

A substantially rectangular depression 46 is stamped into planar surface 34 of plate 10' in a predetermined position relative to the axis of symmetry 32, so as to ensure that, when a similarly-shaped base portion 48 of the contact brush member 12' is located within that depression 46, a contact head 18' of the contact brush member 12' is accurately positioned to engage an appropriate contact track (not shown) carried on a rotating plate associated with a gear mechanism (not shown) which would be covered by said cover plate 10'. The punch used to form the depression 46 is shaped so as to produce an extruded, upstanding boss 50 located in the centre of the depression 46, this boss 50 being formed from metal displaced during the stamping of depression 46. As can be seen in Figures 4 and 5, there is an identical depression 52 and upstanding boss 54 formed in the planar surface 36 of cover 10' exactly opposite to the depression 46 and the boss 50. Depression 52 is identical in shape and size to depression 46 and is positioned exactly underneath depression 46, and thus forms an exact mirror image of depression 46. Similarly, boss 54 is exactly the same size and shape as boss 50, and is positioned exactly underneath boss 50, as shown in Figure 4 of the drawings.

Consequently, planar surface 36 of cover plate 10', having the depression 52 and boss 54 formed therein, is an exact mirror image of planar surface 34 of cover plate 10', having the depression 46 and boss 50 formed therein. Both of the depressions 46 and 52 are stamped simultaneously in cover plate 10' by the use of oppositely-actuated, identical punches. As can be seen in Figure 3, the depression 46 is located on the left-hand side of the axis of symmetry 32, and has a longitudinal axis which substantially co-incides with the line 4-4' in Figure 3 and which extends at a converging angle to the axis of symmetry 32. It will be appreciated that, if the cover plate 10' is rotated about the axis of symmetry 32 until the planar surface 36 is uppermost, then the depression 52 will be located on the right-hand side of the axis of symmetry 32, and will have its longitudinal axis extending at the same converging angle to the axis of symmetry 32 as does the longitudinal axis of depression 46.

As can be seen in Figure 3, contact brush member 12' has a substantially rectangular-shaped base portion 48 having a central aperture 56 formed therein. Base portion 48 is of the correct size and shape to fit closely within either depression 46 or depression 52, and aperture 56 is of the correct size and shape to house either boss 50 or boss 54, depending on which surface of the cover plate 10' it is desired to fit contact brush member 12'. As can be seen in Figure 5, for example, contact brush member 12' can be secured in position within depression 46 by positioning the aperture 56 in base portion 48 over the boss 50 and then rivetting down the protruding portion of boss 50 to clamp the base portion 48 securely in electrical contact with cover plate 10'. The cover plate 10' and contact brush member 12' assembly thus produced is suitably for use as the cover plate for a left-hand configuration windscreen wiper motor. Alternatively, a cover plate 10' and contact brush member 12' assembly suitable for use as the cover plate for a right-hand configuration windscreen wiper motor can be simply and readily produced by securing the contact brush member 12' in the depression 52 by positioning the aperture 56 in base portion 48 over the boss 54 and then rivetting down the protruding portion of boss 54 to clamp the base portion 48 securely in electrical contact with cover plate 10'.

The symmetrical placing of the fixing apertures 38, 40, 42 and 44 in cover plate 10' ensures that the cover plate can be mounted over the gear mechanism of either configuration of windscreen wiper motor without any problems. As regards other contact brush members that are required to contact other annular contact tracks carried on the rotary plate associated with the gear mechanism, these are mounted upon the cover plate 10' by means of an insulated insert (not shown) which is mounted within a shaped aperture 58 through the cover plate 10' specifically positioned relative to the axis of symmetry 32. Since such a shaped aperture is a through aperture extending from planar surface 34 to planar surface 36, that aperture 58 as viewed from planar surface 36 will be the mirror image of that aperture 58 as viewed from planar surface 34. Consequently, the insertion of the insulated insert carrying the other contact brush members into position in aperture 58 from the planar surface 36 side of the cover plate 10' will produce the cover plate and contact brush members assembly suitable for use as the cover plate for a left-hand configuration windscreen wiper motor. Alternatively, the insertion of the insulated insert carrying the other contact brush members into position in aperture 58 from the planar surface 34 side of the cover plate 10' will produce the cover plate and contact brush members assembly suitable for use as the cover plate for a right-hand configuration windscreen wiper motor. The metal cover plate according to the present invention is an improvement over known cover plates for gear mechanisms for windscreen wiper mechanisms, in that it provides a universal cover plate which can be readily and economically manufactured and used to produce cover plates fitted with earth brushes that can be fitted to either left-handed configurations of windscreen wiper motors or to right-handed configurations of windscreen wiper motors, as desired. Consequently both configurations of windscreen wiper motor can be produced easily and rapidly from a single stock of metal cover plates according to the present invention.

## Claims

1. A cover plate (10') for a gear mechanism of a windscreen wiper motor comprising a planar plate having an axis of symmetry (32) lying within the plane of the plate (10') and having a portion thereof shaped to retain a shaped base portion (48) of a contact member (12'), said contact member (12') having an arm portion (16) extending at an angle from said base portion (48) and terminating in a contact head (18'), characterised in that said planar plate (10') has an identical pattern (46,52) formed on either side (34,36) of the plate (10'), each of which identical patterns (46,52) is a mirror image of the other identical pattern, occupies exactly the same position on the plate (10') relative to said axis of symmetry (32) as does the other identical pattern and is configured to retain said shaped base portion (48) of the contact member (12'), said contact head (18') of the contact member (12') being positioned laterally to the left or to the right of said axis of symmetry (32), depending upon which side (34,36) of the plate (10') the shaped base portion (48) is retained when the plate (10') is mounted on a housing of a gear mechanism.

2. A cover plate (10') according to claim 1, characterised in that each identical pattern (46,52) is stamped into a respective side (34,36) of the planar plate (10') and includes one or more upstanding projections (50,54) which locate within corresponding apertures (56) in the shaped base portion (48) of the contact member (12') and are engageable therewith to retain the shaped base portion (48) securely in place in the respective pattern (46,52).

3. A cover plate (10') according to claim 1 or 2, characterised in that the perimeter of the cover plate (10') is provided with suitable fastening apertures (38,40,42,44) symmetrically arranged around said axis of symmetry (32).

4. A cover plate (10') according to any one of the preceding claims, characterised in that the cover plate (10') is a metal cover plate, said contact member (12') is an earth brush for the windscreen wiper motor, and said contact member (12') is secured in direct electrical contact with said metal cover plate (10').

5. A metal cover plate (10') according to claim 4, characterised in that the cover plate (10') includes one or more shaped through apertures (58) therein for housing and retaining therein one or more insulated inserts carrying other contact members for the windscreen wiper motor.

## Patentansprüche

1. Eine Abdeckplatte (10') für einen Getriebemechanismus eines Scheibenwischermotors mit einer ebenen Platte, die eine Symmetrieachse (32) aufweist, die innerhalb der Ebene der Platte (10') liegt, und von der ein Abschnitt gestaltet ist, um einen gestalteten Basisabschnitt (48) eines Kontaktbauteils (12') zu halten, wobei das Kontaktbauteil (12') einen Armabschnitt (16) aufweist, der sich unter einem Winkel vom Basisabschnitt (48) erstreckt und in einem Kontaktkopf (18') endet,
dadurch gekennzeichnet,
daß die ebene Platte (10') ein identisches Muster (46,52) aufweist, das auf beiden Seiten (34,36) der Platte (10') ausgebildet ist, wobei jedes der identischen Muster (46,52) ein Spiegelbild des anderen identischen Musters ist, exakt die gleiche Position auf der Platte (10') relativ zur Symmetrieachse (32) einnimmt, wie dies auch beim anderen identischen Muster der Fall ist, und konfiguriert ist, um den gestalteten Basisabschnitt (48) des Kontaktbauteils (12') zu halten, und der Kontaktkopf (18') des Kontaktbauteils (12') lateral links oder rechts von der Symmetrieachse (32) positioniert ist, in Abhängigkeit davon, auf welcher Seite (34,36) der Platte (10') der gestaltete Basisabschnitt (48) gehalten wird, wenn die Platte (10') auf einem Gehäuse eines Getriebemechanismus angeordnet ist.

2. Eine Abdeckplatte (10') nach Anspruch 1,
dadurch gekennzeichnet,
daß jedes identische Muster (46,52) in eine jeweilige Seite (34,36) der ebenen Platte (10') hinein geprägt ist und einen oder mehrere hochstehende Vorsprünge (50,54) einschließt, welche sich innerhalb entsprechender Öffnungen (56) im gestalteten Basisabschnitt (48) des Kontaktbauteils (12') befinden und damit in Eingriff bringbar sind, um den gestalteten Basisabschnitt (48) sicher lagegemäß im jeweiligen Muster (46,52) zu halten.

3. Eine Abdeckplatte (10') nach Anspruch 1 oder 2,
dadurch gekennzeichnet,
daß der Umkreis der Abdeckplatte (10') mit geeigneten Befestigungsöffnungen (38,40,42,44) versehen ist, die symmetrisch um die Symmetrieachse (32) angeordnet sind.

4. Eine Abdeckplatte (10') nach einem der vorhergehenden Ansprüche,
dadurch gekennzeichnet,
daß die Abdeckplatte (10') eine Metall-Abdeckplatte, das Kontaktbauteil (12') eine Erd-Bürste für den Scheibenwischermotor und das Kontaktbauteil (12') in direktem elektrischen Kontakt mit der Metallabdeckplatte (10') befestigt ist.

5. Eine Metallabdeckplatte (10') nach Anspruch 4,
dadurch gekennzeichnet,
daß die Abdeckplatte (10') darin eine oder mehrere gestaltete Durchgangsöffnungen 58 einschließt, um darin einen oder mehrere isolierte Einsätze aufzunehmen und zu halten, die andere Kontaktbauteile für den Scheibenwischermotor tragen.

## Revendications

1. Plaque de couverture (10') pour le mécanisme d'engrenage d'un moteur d'essuie-glace, comprenant une plaque plane ayant un axe de symétrie (32) situé dans le plan de la plaque (10'), une partie de celle-ci étant façonnée pour retenir la partie d'embase façonnée (48) d'un élément balai de contact (12'), ledit élément balai de contact (12') comprenant une partie de bras (16) formant un angle avec ladite partie d'embase et se terminant dans une tête de contact (18'),
caractérisée en ce que
ladite plaque plane (10') présente une empreinte identique (46, 52) formée dans les deux côtés (34, 36) de la plaque (10'), chacune des empreintes identiques (46, 52) étant une image en miroir de l'autre empreinte identique, occupant exactement la même position sur la plaque (10'), par rapport au dit axe de symétrie (32), que l'autre empreinte identique, et étant configurée de manière à retenir une partie d'embase façonnée (48) d'un élément de contact (12'), ladite tête de contact (18') de l'élément de contact (12') étant positionnée latéralement à gauche ou à droite du dit axe de symétrie (32), en fonction du côté (34, 36) de la plaque (10') sur lequel est fixée la partie d'embase façonnée (48) lorsque la plaque (10') est montée sur le carter d'un mécanisme d'engrenage.

2. Plaque de couverture (10') selon la revendication 1, caractérisée en ce que chaque empreinte identique (46, 52) est estampée dans un côté correspondant (34, 36) de la plaque plane (10') et comprend une ou plusieurs éléments proéminents (50, 54) saillant verticalement, qui s'emboîtent dans des ouvertures correspondantes (56) ménagées dans la partie d'embase façonnée (48) de l'élément de contact (12') et peuvent entrer en engagement avec celle-ci de manière à retenir la partie d'embase façonnée (48) fermement en place dans l'empreinte correspondante (46, 52).

3. Plaque de couverture (10') selon l'une des revendications 1 ou 2, caractérisée en ce que le périmètre de la plaque de couverture (10') est pourvu d'ouvertures de fixation appropriées (38, 40, 42, 44) agencées symétriquement autour du dit axe de symétrie (32).

4. Plaque de couverture (10') selon l'une quelconque des revendications précédentes, caractérisée en ce que ladite plaque de couverture (10') est une plaque de couverture métallique, ledit élément de contact (12') est un balai de terre du moteur d'essuie-glace, et ledit élément de contact (12') est fixé sur ladite plaque de fermeture métallique (10'), en contact électrique direct avec celle-ci.

5. Plaque de couverture métallique (10') selon la revendication 4, caractérisée en ce que la plaque de couverture (10') comprend une ou plusieurs ouvertures façonnées débouchantes (58) ménagées dans celle-ci, conçues pour loger et retenir dans celles-ci des inserts isolés portant d'autres éléments de contact du moteur d'essuie-glace.
